## Europäisches Patentamt

## European Patent Office

## Office européen des brevets

(19)

(11) Veröffentlichungsnummer: **0 060 442**
A1

(12) ## EUROPÄISCHE PATENTANMELDUNG

(21) Anmeldenummer: **82101628.4**

(22) Anmeldetag: **03.03.82**

(51) Int. Cl.³: **G 01 L 19/00**, G 01 L 27/00

(30) Priorität: **17.03.81 DE 3110209**

(43) Veröffentlichungstag der Anmeldung: **22.09.82**
**Patentblatt 82/38**

(84) Benannte Vertragsstaaten: **AT BE CH FR GB IT LI NL SE**

(71) Anmelder: **Karl Dungs GmbH & Co., D-7067 Urbach (DE)**

(72) Erfinder: **Dungs, Karl, Künkelinstrasse 52, D-7060 Schorndorf (DE)**
Erfinder: **Feucht, Friedrich, Weinbergweg 56, D-7064 Remshalden (DE)**
Erfinder: **Schnabel, Rainer, Bussardweg 6, D-7060 Schorndorf/Oberberken (DE)**

(74) Vertreter: **Patentanwälte Kohler - Schwindling - Späth, Hohentwielstrasse 41, D-7000 Stuttgart 1 (DE)**

(54) **Luftdruckwächter.**

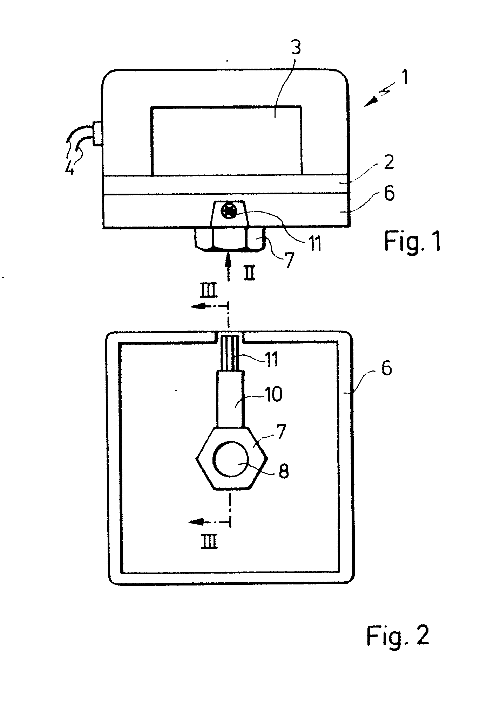

(57) Die Erfindung betrifft einen Luftdruckwächter mit einer Zuluftleitung, durch die das hinsichtlich seines Drucks zu überwachende Medium einem Innenraum des Druckwächters zugeführt wird. Sie besteht darin, daß der Druckwächter eine von Hand betätigbare Ventilanordnung (10) aufweist, die beim Betätigen die Verbindung zwischen dem Innenraum und dem äußeren Ende (Aussparung 8) der Zuluftleitung sperrt und eine Verbindung vom Innenraum nach außen herstellt. (Fig. 2)

Anmelderin

Firma
Karl Dungs GmbH & Co.
D 7067 Urbach

Stuttgart, 10. Februar 1982
P 4027 EP    S/We

Vertreter

Kohler-Schwindling-Späth
Patentanwälte
Hohentwielstraße 41
D 7000 Stuttgart 1

Luftdruckwächter

Die Erfindung betrifft einen Luftdruckwächter mit einer
Zuluftleitung, durch die das hinsichtlich seines Drucks
zu überwachende Medium einem Innenraum des Druckwächters
zugeführt wird, und mit einer in die Zuluftleitung eingeschalteten Ventilanordnung, deren  Ventilkörper in
einer ersten Stellung die Verbindung zwischen dem Innenraum und dem äußeren Ende der Zuluftleitung herstellt
und in einer weiteren Stellung diese Verbindung sperrt
und statt dessen den Innenraum mit einer nach außen
führenden Leitung verbindet.

Ein solcher Luftdruckwächter ist aus der DE-AS 16 48 574 bekannt. Dieser Luftdruckwächter besitzt zum Überwachen des Mediumdruckes einen piezoelektrischen Druckmeßwandler. Ein piezoelektrischer Druckmeßwandler muß im Wechsel zu dem zu überwachenden Druck mit einem Bezugsdruck beaufschlagt werden, weil piezoelektrische Druckmeßwandler keine absoluten Messungen, sondern nur Differenzmessungen gestatten. Aus diesem Grund ist bei dem bekannten Luftdruckwächter in die Zuluftleitung eine Ventilanordnung mit einem als Drehschieber ausgebildeten Ventilkörper eingeschaltet, der motorisch angetrieben ist und es dadurch ermöglicht, den piezoelektrischen Druckmeßwandler periodisch mit einem Bezugsdruck zu beaufschlagen. Bei Luftdruckwächtern, die beispielsweise als Meßglied gefederte Membranen aufweisen, besteht keine Notwendigkeit, ähnliche Ventilanordnungen vorzusehen.

Ein besonderes Anwendungsgebiet für Luftdruckwächter besteht in der Überwachung der Funktion von Gebläsebrennern. Hierbei finden allgemein Druckwächter Anwendung, die als Meßglied eine Membran aufweisen, die in Abhängigkeit von dem überwachten Druck mehr oder weniger weit ausgelenkt wird und mit einem elektrischen Schalter gekoppelt ist. Sinkt die vom Gebläse geförderte Luftmenge zu stark ab, so unterschreitet der dem Druckwächter zugeführte Druck einen zulässigen Minimalwert. Der Druckwächter spricht an und setzt die Heizanlage still. Bei der Wartung von Heizanlagen und sonstigen Einrichtungen, die solche Druckwächter aufweisen, ist es auch notwendig, die Funktion der Druckwächter zu überprüfen. Zu diesem Zweck wurde bisher die die Verbindung zu dem überwachenden Medium herstellende Leitung, also beispielsweise die Verbindungsleitung zum Gebläse, aufgeschraubt oder in anderer Weise
getrennt.

Der Erfindung liegt die Aufgabe zugrunde, eine Möglichkeit zu schaffen, den Druckwächter ohne derartige aufwendige Manipulationen, wie sie das Trennen einer Verbindungsleitung darstellt, zu prüfen.

Diese Aufgabe wird nach der Erfindung dadurch gelöst,
daß das Ventil einen als gefederter Druckknopf ausgebildeten, von Hand betätigbaren Ventilkörper aufweist, in
dessen Ruhestellung der Innenraum mit dem äußeren Ende
der Zuluftleitung verbunden ist.

Die erfindungsgemäße Ausbildung des Luftdruckwächters
macht es möglich, den Luftdruckwächter ohne Auftrennen
irgendwelcher Verbindungen mit der Außenluft in Verbindung zu setzen, indem das dazu vorgesehene Ventil
geöffnet wird, wozu ein einfacher Druck auf den als Druckknopf ausgebildeten Ventilkörper genügt. Demgemäß ermöglicht die Erfindung durch eine äußerst einfache Anordnung
jederzeit und praktisch ohne jeden Arbeitsaufwand eine einwandfreie Überprüfung des Luftdruckwächters.

Bei einer Ausführungsform der Erfindung ist der Druckknopf an einer Bodenplatte des Druckwächters angeordnet. Bei einer weiteren Ausführungsform ist der Druckknopf parallel zur Ebene der Bodenplatte verschiebbar geführt. Dadurch kann die mit dem Druckknopf in Verbindung stehende Ventilanordnung sehr raumsparend untergebracht werden und der Druckknopf kann auch relativ unauffällig angeordnet werden.

Die soeben genannten Bodenplatte kann auch gleichzeitig die Funktion eines Adapters haben, durch die der Druckwächter von einem solchen ohne die geschilderte zum Prüfen verwendete Ventilanordnung in einen Druckwächter mit einer derartigen Ventilanordnung umbaubar ist.

Bei einer Ausführungsform der Erfindung weist der Druckknopf eine Querschnittsform auf, die von der Querschnittsform einer Bohrung, in der er gleitet, abweicht. Dadurch bestehen zwischen dem Druckknopf und der Wandung der Bohrung Zwischenräume, durch die hindurch die Luft aus dem Innenraum des Druckwächters beim Betätigen des Druckknopfs entweichen kann.

Vorteilhaft weist hierzu der Druckknopf eine unrunde Querschnittsform auf, beispielsweise eine sternförmige Querschnittsform, wogegen die Bohrung rund ist. Die unrunde Querschnittsform des Druckknopfs geht bei einer Ausführungsform der Erfindung im Bereich des inneren Endes des Druckknopfs in eine an die Bohrung angepaßte runde Querschnittsform über. In diesem Bereich ist eine Dichtung vorgesehen, die nach dem Loslassen des Druckknopfs das weitere Austreten der Luft zwischen der Seitenwandung des Druckknopfs und der Bohrung verhindert.

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen

Fig. 1    eine Seitenansicht eines Ausführungsbeispiels des Druckwächters,

Fig. 2    eine Bodenansicht in Richtung des Pfeils II in Fig. 1 und

Fig. 3    einen Schnitt entsprechend der Linie III-III in Fig. 2, gegenüber den Fig. 1 und 2 stark vergrößert.

Die Einzelheiten des eigentlichen Druckwächtermechanismus' sind in der Zeichnung nicht dargestellt. Der Druckwächter 1 weist eine Basisplatte 2 auf, die auf ihrer Oberseite die Druckwächtereinrichtung 3 trägt. Diese enthält in an sich bekannter Weise eine Membran und elektrische Schaltkontakte. Die Anschlüsse der elektrischen Schaltkontakte sind über elektrische Leitungen 4 nach außen geführt. Die Basisplatte 2, die einen im wesentlichen quadratischen Grundriß hat,
weist in ihrer Mitte eine durchgehende Aussparung auf,
durch die hindurch die Luft, deren Druck zu überwachen
ist, der Druckwächtereinrichtung 3 zugeführt wird. An
der Unterseite der Basisplatte 2 ist eine Adapterplatte 6
angeschraubt, die an ihrer Unterseite einen Schraubanschluß 7 zum Anschließen einer Verbindungsleitung aufweist, die zu der Einrichtung führt, deren Luftdruck
zu überwachen ist. Die zentrale Aussparung 8 des Scharubanschlusses 7 bildet somit die Eintrittsöffnung für die
Luft in den Druckwächter 1.

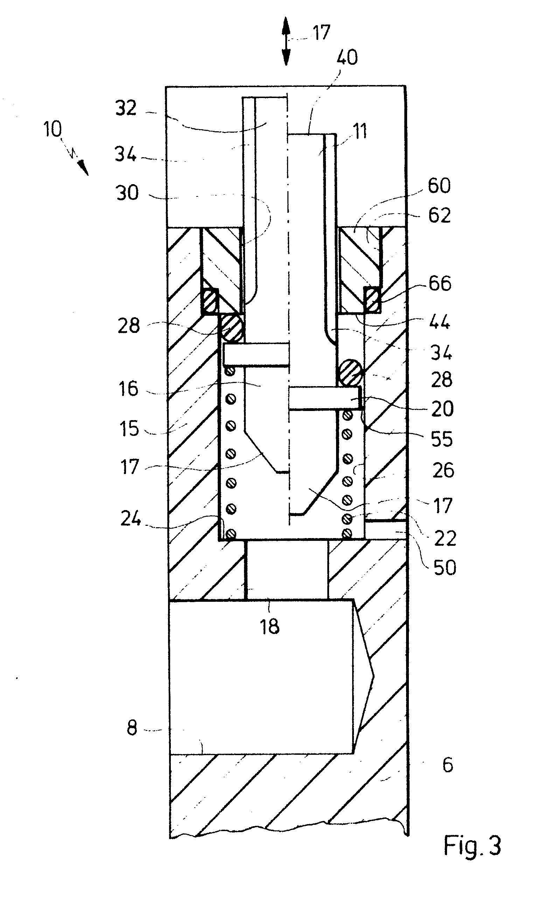

Die Adapterplatte 6 enthält ein Dreiwegeventil 10, das
im Schnitt in Fig. 3 dargestellt ist, wobei im linken
Teil der Fig. 3 das Ventil in seiner Ruhestellung gezeigt
ist, in der die der Eintrittsöffnung 8 zugeführte Luft
auf ihren Druck hin überwacht wird, und im rechten Teil
der Fig. 3 ist das Ventil in einer Mittelstellung gezeigt, die es einnimmt, wenn ein Druckknopf 11 des Ventils 10 teilweise eingedrückt ist, jedoch noch nicht so
tief eingedrückt ist, wie dies für einen einwandfreien
Prüfvorgang im allgemeinen erforderlich ist.

In einer Kammer 15, die sich radial von der Aussparung 8
nach außen erstreckt, ist ein Bolzen 16 in Richtung des
Doppelpfeils 17 verschiebbar geführt. Die Aussparung 8
steht über eine Bohrung 18 mit der Kammer 15 in Verbindung.
Der Bolzen 16 weist einen größeren Durchmesser auf als die
Aussparung 18, er ist an seinem der Bohrung 18 zugewandten
Ende kegelstumpfförmig verjüngt. Dort besteht er aus einem
gummielastischen Material. An den Bolzen 16 schließt sich
ein nach außen ragender ringförmiger Vorsprung 20 an,
auf dessen einer, in Fig. 3 unterer Seite sich eine
Schraubenfeder 22 mit ihrem oberen Ende abstützt, deren
unteres Ende sich an der der Bohrung 18 benachbarten Endwand 24 der Kammer 15 abstützt. Der Vorsprung 20 dient auch zur Führung des Bolzens 16 bei seiner Verschiebebewegung, liegt jedoch nicht gasdicht an der Seitenwand 26 der Kammer 15 an. An der der Feder 22 abgewandten Seite des Vorsprungs 20 ist ein O-Ring 28 aus gummielastischem Material angeordnet, der sowohl an dem Vorsprung 20 als auch an dem hier noch kreiszylindrischen Querschnitt des Bolzens 16 anliegt. Oberhalb des O-Rings 28 geht der kreisförmige Querschnitt des Bolzens 16 in einen sternförmigen Querschnitt über, der in Fig. 1 angedeutet erkennbar ist. Durch diesen sternförmigen Querschnitt werden zwischen einer runden Bohrung 30, in der der in Fig. 3 nach oben weisende Endabschnitt 32 des Bolzens gleitet, und der Seitenwandung des Endabschnittes 32 rinnenförmige Kanäle 34 geschaffen, die eine Verbindung vom Innenraum 15 nach außen freigeben, wenn der Bolzen 16 aus seiner im linken Teil der Fig. 3 gezeigten Ruhestellung durch Drücken auf die nach außen weisende Endfläche 40 z.B. in die im rechten Teil der Fig. 3 gezeigten Stellung bewegt worden ist. Der über die Bohrung 30 nach außen ragende Teil des Endabschnitts 11 bildet einen mit einem Finger betätigbaren Druckknopf. In der Ruhestellung, die im linken Teil der Fig. 3 gezeigt ist, ist der O-Ring 28 fest zwischen dem Vorsprung 20 und der äußeren Endwand 44 eingeklemmt. Da er außerdem an der zylindrischen Außenfläche des Bolzens 16 anliegt, und die Rinnen 34 erst innerhalb der Bohrung 30 beginnen, kann hier keine Luft durch die Rinnen 34 aus der Kammer 15 nach außen dringen.

In der Ruhestellung des Ventils 10 gelangt die von der zu überwachenden Einrichtung (Gebläse) kommende Luft durch die Aussparung 8 und die Bohrung 18 in die Kammer 15 und von dieser durch eine Bohrung 50 zur Druckwächtereinrichtung 3.

0060442

Wird durch Fingerdruck der Bolzen 16 bis zum Anschlag
nach innen bewegt, in der sein kegelstumpfförmiger
Abschnitt 17 dicht am äußeren Rand der Bohrung 18 anliegt, so kann keine Luft mehr von der Aussparung 8
ins Innere der Kammer 15 gelangen, dagegen kann die Luft
aus dem Inneren der Druckwächtereinrichtung 3 durch die
Bohrung 50, die Kammer 15 und den Zwischenraum 55 zwischen der Außenfläche des Vorsprungs 20 und der Seitenwand 26 der Kammer 15 hindurch und durch die Kanäle 34
nach außen gelangen, und hierdurch nimmt der Druckwächter
seinen Ruhezustand ein und kann daraufhin überprüft werden, ob seine elektrischen Schaltkontakte in diesem Falle
richtig arbeiten, beispielsweise eine Heizungsanlage, in
der der Druckwächter eingesetzt ist, stillgesetzt und ein
Warnsignal erzeugt wird.

Die Bohrung 30 ist Teil eines kurzen, relativ dicken, rohrförmigen Verschlußstücks 60, das in eine entsprechend
größere Bohrung 62 der Adapterplatte 6 eingesetzt ist und
dessen innere Stirnfläche 64 einen Anschlag für den O-Ring
28 bildet. Ein weiterer O-Ring 66 verhindert das Entweichen
der Luft entlang der Außenfläche des Verschlußstücks 60.

Die Fig. 1 bis 3 sind nicht maßstäblich. Die Länge des
Ventils 10, gemessen vom inneren Ende der Bohrung 18 bis
zur Stirnfläche 40 des Druckknopfs, wenn sich dieser in
seiner Ruhestellung befindet, beträgt im Ausführungsbeispiel etwa 30 mm.

Alle Teile mit Ausnahme der Feder 22 bestehen aus Kunststoff.

0060442

Patentansprüche

1. Luftdruckwächter mit einer Zuluftleitung, durch die
   das hinsichtlich seines Druckes zu überwachende Medium
   einem Innenraum des Druckwächters zugeführt wird, und
   mit einer in die Zuluftleitung eingeschalteten Ventilanordnung, deren Ventilkörper in einer ersten Stellung
   die Verbindung zwischen dem Innenraum und dem äußeren
   Ende der Zuluftleitung herstellt und in einer zweiten
   Stellung diese Verbindung sperrt und statt dessen den
   Innenraum mit einer nach außen führenden Leitung verbindet, dadurch gekennzeichnet, daß das Ventil einen
   als gefederter Druckknopf (11) ausgebildeten, von Hand
   betätigbaren Ventilkörper (16, 20) aufweist, in dessen Ruhestellung der Innenraum mit dem äußeren Ende
   (Aussparung 8) der Zuluftleitung verbunden ist.

2. Druckwächter nach Anspruch 1, dadurch gekennzeichnet,
   daß der Druckknopf (11) an einer Bodenplatte (Basisplatte 2, Adapterplatte 6) des Druckwächters angeordnet ist.

3. Druckwächter nach Anspruch 2, dadurch gekennzeichnet,
   daß der Druckknopf parallel zur Ebene der Bodenplatte
   verschiebbar geführt ist.

.·/.·

0060442

4. Druckwächter nach einem der vorhergehenden Ansprüche,
   dadurch gekennzeichnet, daß der Druckknopf eine Querschnittsform aufweist, die von der Querschnittsform
   einer Bohrung (30), in der er gleitet, abweicht.

5. Druckwächter nach Anspruch 4, dadurch gekennzeichnet,
   daß der Druckknopf eine unrunde Querschnittsform aufweist, und daß die Bohrung (30) einen runden Querschnitt hat.

6. Druckwächter nach Anspruch 5, dadurch gekennzeichnet,
   daß in einem Abstand vom inneren Ende der unrunden
   Querschnittsform ein O-Ring (28) auf dem beweglichen
   Ventilteil (Bolzen 16) angeordnet ist.

Fig. 1

Fig. 2

0060442

-1-

Fig. 3

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl. 3) |
|---|---|---|---|
| D,Y | <u>DE - A - 1 648 574</u> (H.LIST)  <br> * Patentanspruch 1; Figuren 1 und 2 * | 1-3 | G 01 L 19/00 <br> 27/00 |
| X,Y | <u>FR - A - 2 240 446</u> (COMPAGNIE <u>CENTRALE SICLI</u>)  <br> * Patentansprüche; Figuren * | 1-3 | |

RECHERCHIERTE SACHGEBIETE (Int. Cl. 3)

G 01 L 19
G 01 L 27

Der vorliegende Recherchenbericht wurde für alle Patentansprüche erstellt.

| Recherchenort | Abschlußdatum der Recherche | Prüfer |
|---|---|---|
| DEN HAAG | 15. Juni 1982 | VAN ASSCHE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82